# EUROPÄISCHE PATENTSCHRIFT

(11) **EP 3 332 859 B1**
(45) Veröffentlichungstag und Bekanntmachung des Hinweises auf die Patenterteilung: **21.07.2021**
(21) Anmeldenummer: 17201922.6
(22) Anmeldetag: 15.11.2017
(51) Int. Cl.: B01D 53/14, B01D 53/56, C01B 21/38, C01B 21/26

(54) **VERFAHREN UND VORRICHTUNG ZUM REINIGEN STICKOXIDHALTIGER GASSTRÖME**
METHOD AND DEVICE FOR PURIFYING NITROGEN OXIDE CONTAINING GAS STREAMS
PROCÉDÉ ET DISPOSITIF DE PURIFICATION DE FLUX DE GAZ CONTENANT DES OXYDES D'AZOTE

(30) Priorität: 09.12.2016 DE 102016014707
(43) Veröffentlichungstag der Anmeldung: 13.06.2018
(73) Patentinhaber: Messer Group GmbH, 65812 Bad Soden (DE); Messer Technogas s.r.o., 140 02 Prag (CZ)
(72) Erfinder: Bachleitner, Walter, 4600 Wels (AT); Bek, David, 15300 Prag (CZ)
(74) Vertreter: Münzel, Joachim R.

(56) Entgegenhaltungen:
- DE-A1-102013 002 201
- DE-T2- 69 009 077
- US-A- 2 088 057
- US-A- 2 543 446
- US-A- 2 566 197
- US-A- 4 062 928
- US-A- 4 081 517
- US-A- 4 081 518
- US-A- 4 341 747
- US-A- 4 562 052
- US-A- 5 064 625

## Beschreibung

Die vorliegende Erfindung betrifft ein Verfahren zum Reinigen stickoxidhaltiger Gasströme in einem Prozess zur Herstellung von Salpetersäure. Die Erfindung betrifft des Weiteren eine Vorrichtung zur Herstellung von Salpetersäure.

Zur Entfernung von Stickoxiden aus Gasströmen sind beispielsweise die Verfahren der selektiven nichtkatalytischen (SNCR) und der selektiven katalytischen Reduktion (SCR) bekannt, bei denen die im Gasstrom enthaltenen Stickoxide (NOₓ) durch Zuführung einer Waschlösung absorbiert bzw. durch Einsprühen von Ammoniak zu elementarem Stickstoff reduziert werden.

Aus der EP 1 950 176 A2 ist ein Verfahren zur Entfernung von Stickoxiden aus einem Abgasstrom bekannt, bei dem der Abgasstrom bei einer Temperatur von 65°C bis 135°C mit Ozon kontaktiert wird. Dabei reagieren die Stickoxide mit dem Ozon unter Bildung von N₂O₅ und Salpetersäure. N₂O₅ und Salpetersäure werden anschließend in einem Partikelwäscher entfernt.

In der US 6 231 824 B1 wird vorgeschlagen, Stickstoffmonoxid aus Gasströmen dadurch zu entfernen, dass zunächst der Gasstrom bei einer Temperatur von 150°C bis 1000°C an einem Zeolithkatalysator mit Sauerstoff in Kontakt gebracht wird, wobei Stickstoffmonoxid mit Sauerstoff zu Stickstoffdioxid reagiert. Anschließend wird der Stickstoffdioxid-haltige Gasstrom mit Ozon in Kontakt gebracht; dabei wird das Stickstoffdioxid zumindest teilweise in Salpetersäure umgewandelt. Die Salpetersäure wird mittels einer wässerigen Flüssigkeit aus dem Gasstrom ausgewaschen.

Die US 4 562 052 A die US 4 081 517 A und die US 2 543 446 A beschreiben einen Prozess zur Entfernung von Stickoxiden aus einem Abgasstrom, insbesondere dem Abgasstrom einer Anlage zur Herstellung von Salpetersäure.

Die 690 09 077 T2 beschreibt ein Verfahren zur Behandlung von Stickoxyden in einer Anlage zur Herstellung von Salpetersäure, bei dem in einem mit einem Absorptionsturm der Anlage verbundener Oxygenierbehälter eine zusätzliche Wäsche der Schwachsäure aus dem Absorptionsturm erfolgt. DE102013002201 A1 beschreibt ein Verfahren und eine Produktionsanlage zur Herstellung von Salpetersäure.

Mit Stickoxiden belastete Abgasströme fallen insbesondere bei dem zur technischen Herstellung von Salpetersäure überwiegend eingesetzten Ostwald-Verfahren an. Bei diesem Verfahren wird zunächst Ammoniak und Sauerstoff in einem Reaktor an einem meist aus Edelmetallen, beispielsweise Platin-Rhodium, bestehenden Netzkatalysator zu Stickstoffmonoxid und Wasserdampf umgesetzt. Anschließend wird der Reaktoraustrag in einem Kondensator auf eine Temperatur abgekühlt, bei der das Wasser kondensiert. Ein Teil des Stickstoffmonoxids reagiert mit Wasser und Sauerstoff unter Bildung einer wässerigen, Salpetersäure enthaltenden Lösung, die im Übrigen auch Stickoxide, insbesondere Stickstoffmonoxid, in gelöster Form enthält. Das verbleibende, nicht in Lösung gehende Gasgemisch wird einem Absorptionsturm zugeführt, in welchem ein Teil der gasförmigen Stickoxide mit Sauerstoff und Wasser zu Salpetersäure umgesetzt wird. Das Wasser durchläuft dabei den Absorptionsturm üblicherweise im Gegenstrom zum aufsteigenden Gasstrom. Die Salpetersäure sammelt sich am Boden des Absorptionsturms in einer wässrigen Lösung an. Diese Salpetersäure enthaltende Lösung wird, ebenso wie die bereits im Kondensator gebildete Salpetersäure enthaltende Lösung, abgezogen, zum Kopf des Absorptionsturms gepumpt und dort eingesprüht, um die noch in der Lösung enthaltenen nitrosen Gase zu Salpetersäure umzusetzen. In vielen Fällen werden auch mehrere Absorptionstürme hintereinander geschaltet, wobei die Reihe der Absorptionstürme vom Gasstrom bzw. der abgezogen Salpetersäure im Gegenstrom durchlaufen wird. Um die Absorptionsfähigkeit der nitrosen Gase zu erhöhen, werden die Gase im Absorptionsturm bzw. in den Absorptionstürmen auf einen höheren Druck von 1 bis 15 bar(g) gebracht. Dennoch bleiben Stickoxide in nicht zu vernachlässigbarem Umfang im Abgas. Insbesondere bei Anlagen, deren Absorptionskolonnen auf einem vergleichsweise niedrigen Druck von 1 bis 5 bar(g) arbeiten (sogenannte Nieder- bzw. Mitteldruckanlagen), ist der Anteil nitroser Abgase im Abgas sehr hoch, was insbesondere auf einen niedrigen Sauerstoffpartialdruck in der üblicherweise als Sauerstofflieferant in der Absorptionskolonne eingesetzten Luft zurückzuführen ist. Das Anlegen höherer Drücke führt zwar zu einer Verringerung des Restgehaltes an Stickoxiden im Abgas, ist jedoch mit erheblichen Mehrkosten für die Kompression und die entsprechend für höhere Drücke geeignete Auslegung der Anlagenkomponenten verbunden.

Aufgabe der vorliegenden Erfindung ist daher, den verfahrenstechnischen und betriebswirtschaftlichen Aufwand bei der Entstickung von NOₓ-haltigen Gasen, insbesondere von Abgasen bei einem Prozess zur Herstellung von Salpetersäure, zu reduzieren.

Gelöst ist diese Aufgabe durch ein Verfahren mit den Merkmalen des Patentanspruchs 1 sowie durch eine Vorrichtung mit den Merkmalen des Patentanspruchs 6. Vorteilhafte Ausgestaltungen der Erfindung werden in den Unteransprüchen angegeben.

Gemäß dem erfindungsgemäßen Verfahren wird zunächst ein NOₓ - haltiger Gasstrom im Bodenbereich eines ersten Reaktors (Wäscher) eingespeist und im Gegenstrom zu einer dem Kopfraum dieses Reaktors zugeführten wässerigen Waschflüssigkeit durch den Reaktor geführt. Dabei lösen sich Stickoxide aus dem Gasstrom in der Waschflüssigkeit und reichern diese mit Stickoxiden an. Anschließend wird die mit Stickoxiden angereicherte Waschflüssigkeit in den Kopfraum eines zweiten Reaktors eingeleitet und dort in Kontakt mit einem sauerstoffreichen Gas gebracht. Dieses Gas wird dem zweiten Reaktor an beliebiger Stelle zugeführt, zum Beispiel, aber nicht notwendigerweise, in dessen unteren Bereich und durchläuft den zweiten Reaktor dann im Gegenstrom zur Waschflüssigkeit. Im Sumpf des zweiten Reaktors sammelt sich eine wässerige, Salpetersäure enthaltende Flüssigkeit an. Die wässerige, Salpetersäure enthaltene Flüssigkeit wird aus dem Sumpf des zweiten Reaktors abgezogen und in zwei Teilströme separiert. Ein erster Teilstrom wird in den ersten Reaktor zurückgeführt und dort zum Waschen des Gasstroms eingesetzt. Ein zweiter Teilstrom wird abgeführt und in weiteren Prozessen eingesetzt; beispielsweise wird dieser Teilstrom in einen Absorptionsturm einer Anlage zur Erzeugung von Salpetersäure eingeleitet, um deren Effizienz zu steigern. Die durch den zweiten Teilstrom entzogene Flüssigkeitsmenge wird durch eine gleiche Menge frischer, d.h. Stickoxid-armer Waschflüssigkeit, beispielsweise Wasser, die in den ersten Reaktor eingespeist wird, ersetzt.

Durch die Erfindung wird somit ein NOx-reiches Gas und eine NOₓ -arme Waschflüssigkeit in ein NOₓ -armes Gas und eine Salpetersäure enthaltende Flüssigkeit umgesetzt.

Als "sauerstoffreiches Gas" wird hier allgemein ein Gas mit einem Sauerstoffgehalt von mehr als 21 Vol.-% verstanden, bevorzugt ein Gas mit einem Sauerstoffgehalt von über 80 Vol.-%.

Mit dem erfindungsgemäßen Verfahren kann der Anteil an Stickoxiden im Abgas erheblich reduziert werden. Beispielsweise werden durch das erfindungsgemäße Verfahren 50% und mehr der im Gasstrom enthaltenen Stickoxide eliminiert. Dadurch können insbesondere herkömmliche Verfahren wie beispielsweise das SCR oder das SNCR Verfahren wirksam unterstützt und der Verbrauch teurer Reinigungschemikalien zur Entstickung des Abgases reduziert werden. Zudem kann die erzeugte Salpetersäure enthaltende Flüssigkeit vorteilhaft genutzt werden, insbesondere beim Einsatz des erfindungsgemäßen Verfahrens in einem Prozess zur Herstellung von Salpetersäure.

In der Regel ist der in den Wäscher zurückgeführte erste Teilstrom der Salpetersäure enthaltenden Flüssigkeit größer als der abgeführte zweite Teilstrom. Bevorzugt werden zu 50% bis 99%, besonders bevorzugt 80% bis 95% der Salpetersäure enthaltenden Flüssigkeit aus dem zweiten Reaktor in den ersten Reaktor zurückgeführt; der zweite Teilstrom umfasst somit bevorzugt zwischen 1% und 20% der aus dem zweiten Reaktor abgezogenen Salpetersäure enthaltenen Flüssigkeit. Die zurückgeführte Salpetersäure enthaltende Flüssigkeit dient - gemeinsam mit frischer Reinigungsflüssigkeit, insbesondere Wasser oder eine sonstige wässerige Flüssigkeit, die gleichzeitig oder zeitversetzt zugeführt wird - als Waschflüssigkeit im ersten Reaktor und wird dort im Gegenstrom zum eingespeisten Gasstrom geführt.

Bevorzugt wird die Waschflüssigkeit im ersten Reaktor über einen Zeitraum (Kontaktzeit) von 3s bis 40s mit dem NOₓ-enthaltenden Gasstrom in Kontakt gebracht. Bei einer zu kurzen Kontaktzeit von deutlich unter 3s verbleibt ein größerer Teil der Stickoxide in der Gasphase, bei einer Zeitdauer von 40s ist in der Regel bereits ein großer Teil der Stickoxide eingelöst.

Eine vorteilhafte Ausgestaltung des erfindungsgemäßen Verfahrens ist dadurch gekennzeichnet, dass im ersten Reaktor ein Betriebsdruck von 0 bis 8 bar (g) oder darüber herrscht. Im zweiten Reaktor liegt der Betriebsdruck jeweils höher, beispielsweise bei etwa 4 bis 12 bar (g).

Das erfindungsgemäße Verfahren wird in einem Prozess zur Herstellung von Salpetersäure eingesetzt. Dabei wird als NOₓ - haltiger Gasstrom ein Abgasstrom aus einem Teilprozess der Salpetersäureherstellung eingesetzt, beispielsweise ein Gasstrom, der dem Kopfraum eines Absorptionsturms entnommen wird.

Der im ersten Reaktor anfallende Abgasstrom wird ebenso vorteilhaft in einem Prozess zur Herstellung von Salpetersäure verwendet. Dazu wird der im ersten Reaktor anfallende Abgasstrom in den Absorptionsteil, beispielsweise in einen Absorptionsturm, einer Anlage zur Herstellung von Salpetersäure eingeleitet. Auf diese Weise wird das erfindungsgemäße Verfahren bzw. eine erfindungsgemäße Vorrichtung in den Absorptionsprozess der Salpetersäureherstellung zwischengeschaltet, indem das zu reinigende NOₓ-haltige Gas einem ersten Absorptionsturm entnommen und das im ersten Reaktor der erfindungsgemäßen Vorrichtung anfallende Abgas dem gleichen oder einem zweiten Absorptionsturm zur weiteren Absorption zugeführt wird.

In einer abermals vorteilhaften Ausführungsform der Erfindung wird als Waschflüssigkeit im ersten Reaktor, zusätzlich zu der Salpetersäure enthaltenden Flüssigkeit aus dem zweiten Reaktor, Wasser und/oder eine wässerige, Salpetersäure enthaltende Lösung eingesetzt. Die Salpetersäure enthaltende Lösung wird dabei bevorzugt insbesondere einem Teilprozess der Salpetersäureherstellung entnommen, beispielsweise aus dem Sumpf eines Absorptionsturms.

Als Waschflüssigkeit im ersten Reaktor wird beispielsweise Wasser oder eine Lösung, die Salpetersäure und/oder Peroxysalpetersäure (HNO₄) enthält, verwendet. Eine vorteilhafte Ausgestaltung der Erfindung sieht vor, dass Wasserstoffperoxid (H₂O₂) der Waschflüssigkeit im ersten Reaktor - anstelle oder ergänzend zu anderen Waschflüssigkeiten - zugeführt wird, beispielsweise in Form einer wässerigen, H₂O₂ enthaltenden Lösung.

Die Aufgabe der Erfindung wird auch durch eine Vorrichtung zum Herstellen von Salpetersäure mit den Merkmalen des Patentanspruchs 6 gelöst. Die erfindungsgemäße Vorrichtung umfasst zumindest einen ersten Absorptionsturm sowie einen ersten und einem zweiten Reaktor. Im Kopfraum des ersten Reaktors mündet mindestens eine Flüssigkeitszuleitung für eine Waschflüssigkeit sowie eine Gasableitung zum Abführen von Abgas ein. Im Bodenbereich des ersten Reaktors münden eine Gaszuleitung für einen stickoxidhaltigen Gasstrom sowie eine Flüssigkeitsableitung ein. In den Kopfraum des zweiten Reaktors mündet eine mit der Flüssigkeitsableitung aus dem ersten Reaktor strömungsverbundene Flüssigkeitszuleitung ein. In den zweiten Reaktor mündet zudem eine mit einer Quelle für ein sauerstoffreiches Gas strömungsverbundene Gaszuleitung ein. Die Gaszuleitung kann dabei im Kopfraum, im Bodenbereich oder an anderer Stelle in den zweiten Reaktor einmünden. Im Bodenbereich des zweiten Reaktors mündet eine Flüssigkeitsableitung aus, die mit einer in den Kopfraum des ersten Reaktors einmündenden Flüssigkeitszuleitung strömungsverbunden ist. Das zu reinigende NOₓ-haltige Gas aus der Gaszuleitung wird dem ersten Absorptionsturm entnommen und das im ersten Reaktor anfallende Abgas über die Gasableitung dem gleichen oder einem zweiten Absorptionsturm zur weiteren Absorption zugeführt.

Der erste Reaktor der erfindungsgemäßen Vorrichtung dient somit als Wäscher, in dem ein mit NOₓ beladener Gasstrom in Kontakt mit einer Waschflüssigkeit gebracht wird, die vorzugsweise im Gegenstrom zum zu reinigenden Gasstrom geführt wird. Bei der Waschflüssigkeit handelt es sich bevorzugt um Wasser und/oder eine Salpetersäure enthaltende Lösung, kann jedoch auch andere Substanzen enthalten, wie beispielsweise Wasserstoffperoxid. Im zweiten Reaktor wird mit NOₓ aus dem Gasstrom beladene Sumpfflüssigkeit aus dem ersten Reaktor in Kontakt mit Sauerstoff aus einer Sauerstoffquelle gebracht. Der Sauerstoff wird dem zweiten Reaktor in Gasform zugeführt, wobei die Zuführung bevorzugt, jedoch nicht notwendigerweise, im unteren Bereich des Reaktors erfolgt. Im zweiten Reaktor reagieren die in der Waschflüssigkeit eingelösten Stickoxide mit Wasser und Sauerstoff unter Bildung einer Salpetersäure enthaltenden Flüssigkeit, die sich im Sumpf des zweiten Reaktors sammelt und über die Flüssigkeitsableitung abgeführt wird. Die Flüssigkeitsableitung zweigt an einer Verzweigungsstelle auf in eine Rückleitung, die mit dem Kopfraum des ersten Reaktors strömungsverbunden ist, und in eine abführende Flüssigkeitsleitung. Durch die Rückleitung wird ein Teilstrom, bevorzugt der größte Teil, der sich im Sumpf des zweiten Reaktors ansammelnden Flüssigkeit in den ersten Reaktor zurückgeführt, während durch die abführende Flüssigkeitsleitung der restliche Teilstrom abgeführt und weiterverwertet wird. Die Rückleitung besitzt bevorzugt einen größeren Strömungsquerschnitt als die abführende Flüssigleitung. Die Menge des über die abführende Flüssigkeitsleitung abgeführten Teilstroms an Salpetersäure enthaltender Flüssigkeit wird durch die gleiche Menge an Waschflüssigkeit im ersten Reaktor ersetzt. Die Mengenströme der Teilströme können im Übrigen auch nach vorgegebenen oder gemessenen Parameters, beispielsweise der Stickoxidkonzentration im Abgas des ersten Reaktors, durch eine geeignete Steuereinheit geregelt werden.

Der erste Reaktor ist so ausgelegt, dass eine zur Einlösung eines erheblichen Teils der im Gasstrom enthaltenden Stickoxide in die Waschflüssigkeit hinreichende Kontaktzeit von beispielsweise 3s bis 40s gegeben ist. Die "hinreichende Kontaktzeit" kann durch geeignete Maßnahmen beeinflusst werden, beispielsweise durch die Bereitstellung großer Kontaktoberflächen mittels Packungen und/oder durch Erzeugen eines möglichst feinteiligen Aerosols aus der mit dem Gasstrom in Kontakt tretenden Flüssigkeit.

Demzufolge ist bevorzugt der erste und/oder der zweite Reaktor mit einer Packung ausgerüstet, um eine möglichst große Reaktionsoberfläche für die jeweilige Reaktion zu schaffen. Alternativ oder ergänzend zu einer solchen Ausrüstung mit einer Packung mündet die jeweilige Flüssigkeitszuleitung in den ersten und/oder in den zweiten Reaktor an einer Sprühdüse aus, durch die die jeweils zugeführte Flüssigkeit unter Ausbildung eines Aerosols möglichst fein verteilt in den Reaktor eingesprüht werden kann. Generell können im ersten Reaktor alle üblichen Formen der Gegenstrom-Nasswäsche zum Einsatz kommen, wie beispielsweise auch eine im Reaktor eingebaute Maschenplatte.

Die erfindungsgemäße Vorrichtung kann als kompakte, in einem Gehäuse, Container oder Rahmengestell aufgenommene Anlage ausgeführt werden, wobei der erste und/oder der zweite Reaktor jeweils ein Volumen von nicht mehr als 20 m³ bis 150 m³ aufweist.

Anhand der Zeichnungen sollen Ausführungsbeispiele der Erfindung näher erläutert werden. In schematischen Ansichten zeigen:
- Fig.1:: den Schaltplan einer Vorrichtung zum Reinigen stickoxidhaltiger Gasströme zur Erzeugung von Salpetersäure,
- Fig. 2:: Die Anordnung einer erfindungsgemäßen Vorrichtung in einer erfindungsgemäßen Anlage zur Erzeugung von Salpetersäure.

Die Vorrichtung 1 umfasst einen ersten Reaktor 2 und einen zweiten Reaktor 3, die in einem hier nicht gezeigten Gehäuse oder Rahmengestell aufgenommen sind. Der erste Reaktor 2 entspricht einem Gaswäscher, der zur Reinigung eines mit Stickoxiden beladenen Gasstroms dient. Dazu wird der mit Stickoxiden beladene Gasstrom über eine Gaszuleitung 4 in den unteren Teil des Reaktors 2, bevorzugt oberhalb des Sumpfes 5, zugeführt. Im Kopfraum 6 des Reaktors 2 münden ein Gasauslass 7 für das gereinigte Gas sowie wenigstens eine Zuleitung 8 für eine Waschflüssigkeit, beispielsweise für Wasser oder eine wässerige Lösung, die Salpetersäure und/oder Wasserstoffperoxid enthält, ein. Unterhalb des Kopfraums 6 und oberhalb des Eintritts der Gaszuleitung 4 in den Reaktor 2 befindet sich eine Kontaktstrecke 9 zum Kontaktieren des beladenen Gasstroms mit der Waschflüssigkeit. In der Kontaktstrecke 9 können sich in üblicher Weise Packungen befinden. Sofern keine Packungen in der Kontaktstrecke 9 vorhanden sind, und/oder zur Gewährleistung einer gleichmäßigen Verteilung der Waschflüssigkeit im Reaktor 2 mündet die Zuleitung 8 bevorzugt an einer hier nicht gezeigte Sprühdüse aus.

Aus dem Sumpf 5 im Bodenbereich des ersten Reaktors 2 zweigt eine Flüssigkeitsableitung 10 aus. Die Flüssigkeitsableitung 10 geht in eine Flüssigkeitszuleitung 11 über, die in den Kopfraum des Reaktors 3 einmündet. Auch hier besteht die Möglichkeit, die Flüssigkeitszuleitung 11 im Reaktor 3 an einer hier nicht gezeigten Sprühdüse ausmünden zu lassen. Zur Förderung von Flüssigkeit aus dem Sumpf 5 des Reaktors 2 in den Reaktor 3 ist eine Pumpe 12 vorgesehen.

In den Reaktor 3, mündet oberhalb des Sumpfes 13 und unterhalb einer Kontaktstrecke 14 eine Gaszuleitung 15 ein. Der hier gezeigte Ort für die Einmündung der Gaszuleitung 15 in den Reaktor 3 ist allerdings nicht zwingend; im Rahmen der Erfindung kann die Gaszuleitung 15 ebenso gut an anderer Stelle in den Reaktor 3 einmünden, beispielsweise auch in den Kopfraum oder in den Sumpf 13 des Reaktors 3.

Die Gaszuleitung 15 ist mit einer Quelle für ein sauerstoffreiches Gas strömungsverbunden, bei der es sich beispielsweise um einen Tank 16 für Flüssigsauerstoff mit angeschlossenem Kaltvergaser 17 handelt; es können jedoch auch andere Quellen für das sauerstoffreiche Gas zum Einsatz kommen, beispielsweise ein Flaschenbündel oder eine Rohrleitung. Aus dem Bodenbereich des Reaktors 3 mündet des weiteren eine mit dem Sumpf 13 des Reaktors 3 strömungsverbundene Flüssigkeitsleitung 18 aus. Die Flüssigkeitsleitung 18 endet an einer Verzweigung 19. Von dieser führt zum einen eine Rückleitung 21 zurück in den Kopfraum 6 des Reaktors 2 und zum anderen eine Flüssigkeitsleitung 22, über die ein Teil der dem Sumpf 13 entnommenen Flüssigkeit weiteren Verarbeitungsschritten zugeführt werden kann.

In der Flüssigkeitsleitung 18 ist, stromauf zur Verzweigung 19, eine Kühleinrichtung 23 angeordnet, bei der es sich beispielsweise um eine Kältemaschine oder um einen Wärmetauscher handelt; Im letzteren Falle erfolgt die Kühlung mittels eine Kältemediums, beispielsweise Flüssigstickstoff oder Kühlwasser. Es ist insbesondere auch möglich, zur Kühlung in der Kühleinrichtung 23 einen Teil des Kälteinhalts des im Tank 16 bevorrateten flüssigen Sauerstoffs heranzuziehen. Die Kühleinrichtung 23 kann im Übrigen auch - zusätzlich oder alternativ zur hier gezeigten Anordnung in der Flüssigkeitsleitung 18 - an anderer Stelle in der Vorrichtung 1 angeordnet sein, beispielsweise in der Flüssigkeitsableitung 10 und/oder der Flüssigkeitszuleitung 11.

Es ist im Rahmen der Erfindung möglich, die Kontaktstrecke 14 des Reaktors 3, ähnlich wie die Kontaktstrecke 9 des Reaktors 2, mit Packungen auszurüsten. Weiterhin kann die Rückleitung 21 anstatt direkt in den Kopfraum 6 des Reaktors 2, zunächst in die Zuleitung 8 einmünden (oder umgekehrt), sodass in den Kopfraum 6 des Reaktors 2 selbst nur eine Zuleitung für Waschflüssigkeit einmündet.

Im Einsatz der Vorrichtung 1 strömt das mit Stickoxiden beladene Gas durch die Zuleitung 4 in den Reaktor 2 ein. Bei dem beladenen Gasstrom handelt es sich beispielsweise um Abgas einer Anlage für die Produktion von Salpetersäure. Der beladene Gasstrom durchströmt den Reaktor 2 von unten nach oben und wird im Bereich der Kontaktstrecke 9 in Kontakt mit der aus der Zuleitung 8 einströmenden Waschflüssigkeit sowie mit der über die Rückleitung 21 zugeführten Flüssigkeit aus dem Sumpf 13 des Reaktors 3 gebracht. Beim Kontakt mit dem beladenen Gasstrom lösen sich Stickoxide aus dem Gasstrom in den Flüssigkeiten. Die sich insgesamt ergebende Stickoxide enthaltende Flüssigkeit sammelt sich im Sumpf 5 des Reaktors 2. Das von Stickoxiden zumindest teilweise befreite Gas wird über den Gasauslass 7 abgeführt.

Bei der über die Zuleitung 8 herangeführten Waschflüssigkeit handelt es sich um Wasser oder um eine wässerige Lösung. Sofern die Vorrichtung 1 zur Entstickung eines Abgases aus der Salpetersäureproduktion dient, ist es vorteilhaft, über die Zuleitung 8 Salpetersäure enthaltende Flüssigkeit aus dem Sumpf eines (hier nicht gezeigten) Absorptionsturms einer Anlage zur Salpetersäureproduktion zuzuführen. Im Reaktor 2 herrscht ein Überdruck von etwa 0-8 bar (g). Der Reaktor 2 ist, beispielsweise durch eine geeignete Packung, so konstruiert, dass eine minimale durchschnittliche Kontaktdauer von Gasstrom und Waschflüssigkeit von 3 s bis 40 s gewährleistet ist.

Die wässerige Flüssigkeit aus dem Sumpf 5 des Reaktors 2 wird über die Flüssigableitung 10 abgezogen und mittels der Pumpe 12 über die Flüssigkeitszuleitung 11 in den Kopfraum des Reaktors 3 eingebracht. Im Bereich der Kontaktstrecke 14 wird die Flüssigkeit in Kontakt mit dem über die Gaszuleitung 15 zugeführten und im Reaktor 3 aufsteigenden sauerstoffreichen Gas gebracht. Dabei reagieren die in de Flüssigkeit gelösten Stickoxide zumindest teilweise mit Sauerstoff und Wasser unter Bildung von Salpetersäure:

(1) 2 NO + O₂ → 2 NO₂

(2) 2 NO₂ → N₂O₄

(3) NO₂ + H₂O → HNO₃ + NO

(4) 2 N₂O₄ + O₂ + 2 H₂O → 4 HNO₃

Die entstehende Salpetersäure enthaltende Flüssigkeit sammelt sich im Sumpf 13 des Reaktors 3. Sie wird über die Flüssigkeitsleitung 18 abgezogen und in der Kühleinrichtung 23 gekühlt, um anschließend zum größten Teil über die Rückleitung 21 in den Reaktor 2 eingespeist zu werden, wo sie als Waschflüssigkeit dient. Ein kleinerer Teil der Salpetersäure enthaltenden Lösung, bevorzugt nicht mehr als 5% bis 20%, wird über die Flüssigkeitsleitung 22 abgeführt, wobei die dabei abgeführte Flüssigkeitsmenge durch eine gleiche Menge an Waschflüssigkeit ersetzt wird, die dem ersten Reaktor 2 über Zuleitung 8 zugeführt wird. Die über die Flüssigkeitsleitung 22 abgeführte Flüssigkeit wird vorteilhaft in weiteren Prozessen eingesetzt, beispielsweise wird sie einem Absorptionsturm einer Anlage zur Salpetersäureproduktion zugeführt und erhöht damit deren Effizienz.

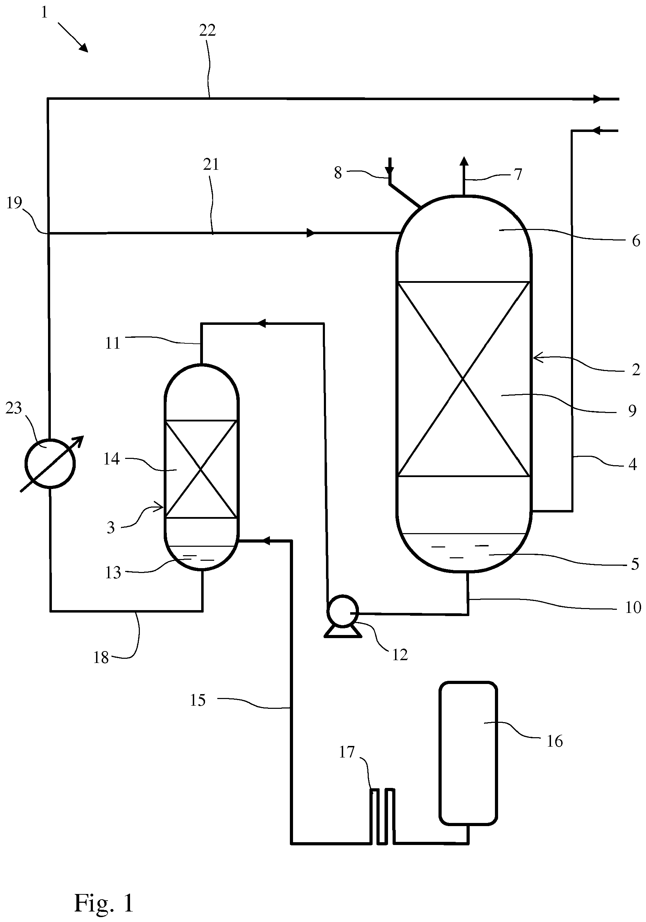

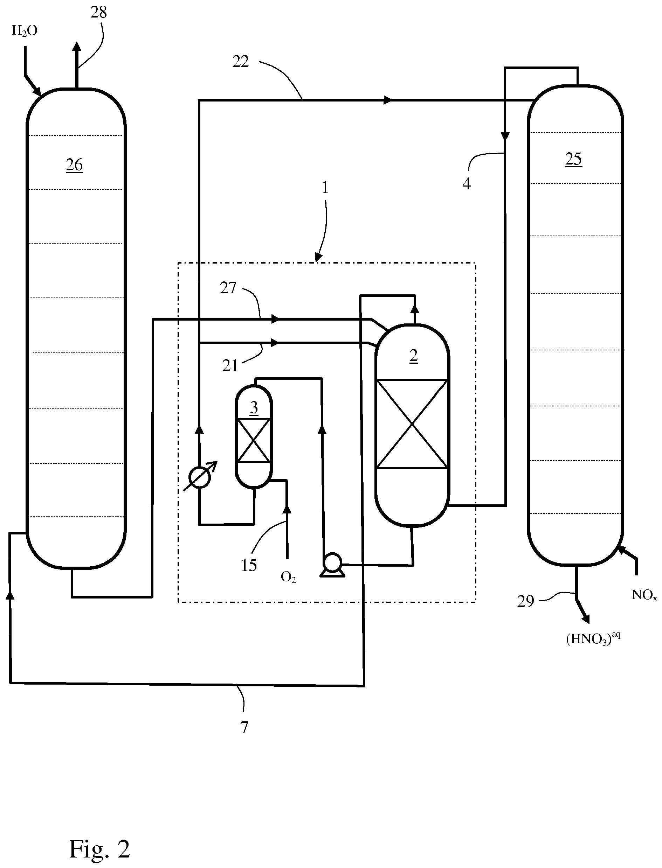

Fig. 2 zeigt die durch eine strickpunktierte Linie angedeutete Vorrichtung 1 mit erstem Reaktor 2 und zweitem Reaktor 3, die in den einer Anlage zur Erzeugung von Salpetersäure integriert ist. Eine derartige Anlage ist beispielsweise aus der EP 2 953 894 A1 bekannt, auf die hier ausdrücklich Bezug genommen wird. Von der Anlage zur Erzeugung von Salpetersäure ist hier nur ein Teil der Absorptionsstrecke mit zwei in üblicher Weise aufgebauten Absorptions-türmen 25, 26 gezeigt. Im Übrigen sind gleich wirkende Bestandteile bei der Ausführungsform nach Fig. 2 mit den gleichen Bezugszeichen versehen wie in Fig. 1.

Gemäß dem Ausführungsbeispiel nach Fig. 2 erfolgt die Zuführung des stickoxidhaltigen Gases zum ersten Reaktor 2 aus dem Kopfraum eines ersten Absorptionsturms 25. Gleichzeitig wird das im ersten Reaktor 2 entstehende, über den Gasauslass 7 abgeführte Abgas einem zweiten Absorptionsturm 26 zugeführt. Als Waschflüssigkeit im ersten Reaktor 2 dient zum einen Sumpfflüssigkeit aus dem zweiten Reaktor 3, die über die Zuleitung 21 in den Kopfraum des ersten Reaktors 2 eingespeist wird, und zum anderen Salpetersäure und/oder Peroxosalpetersäure (HNO₄) enthaltende Lösung, die aus dem Sumpf des Absorptionsturms 26 entnommen und über eine Zuleitung 27 ebenfalls in den Kopfraum des ersten Reaktors 2 der Vorrichtung 1 eingespeist wird. Die Zuleitung 27 tritt bei diesem Ausführungsbeispiel insoweit an die Stelle der Zuleitung 8 für Waschflüssigkeit in Fig. 1. Der Teilstrom an Salpetersäure enthaltender Sumpfflüssigkeit aus dem zweiten Reaktor 3, der nicht in den ersten Reaktor 2 eingespeist wird, wird über Flüssigkeitsleitung 22 dem Kopfraum des Absorptionsturms 25 zugeführt.

Die entsprechend Fig. 2 in den Absorptionsteil einer Anlage zur Erzeugung von Salpetersäure integrierte erfindungsgemäße Vorrichtung 1 erhöht die Effizienz der Salpetersäureproduktion. Sie reduziert den Anteil an Stickoxiden in dem über Abgasleitung 28 abgeführten Abgas der Produktionsanlage und steigert zugleich den Ertrag an Salpetersäure im Produkt, das über eine Produktausleitung 29 des Absorptionsturms 25 abgeführt wird.

Die erfindungsgemäße Vorrichtung wird bevorzugt zur Behandlung von Abgasströmen aus der Salpetersäureproduktion eingesetzt, sie kann jedoch auch zur Reinigung von anderen stickoxidhaltigen Gasströmen eingesetzt werden. Im Übrigen kann das erfindungsgemäße Verfahren bzw. die erfindungsgemäße Vorrichtung auch ergänzend zu weiteren Einrichtungen zur Reduzierung von Stickoxiden in Gasströmen zum Einsatz kommen, wie beispielsweise Einrichtungen, die auf der Basis der selektiven nichtkatalytischen (SNCR) oder der selektiven katalytischen Reduktion (SCR) basieren. Durch den Einsatz der Erfindung wird deren Effizienz erhöht, und eine Reduzierung oder sogar den völligen Verzicht auf zur Entstickung eingesetzte Reinigungschemikalien wie beispielsweise Ammonium, Erdgas oder Ozon ermöglicht.

### Bezugszeichenliste

1. Vorrichtung
2. Erster Reaktor
3. Zweiter Reaktor
4. Gaszuleitung (für den zu reinigenden Gasstrom)
5. Sumpf
6. Kopfraum
7. Gasauslass
8. Zuleitung (für Waschflüssigkeit)
9. Kontaktstrecke
10. Flüssigkeitsableitung
11. Flüssigkeitszuleitung
12. Pumpe
13. Sumpf
14. Kontaktstrecke
15. Gaszuleitung (für Sauerstoff)
16. Tank (für LIN)
17. Kaltvergaser
18. Flüssigkeitsleitung
19. Verzweigung
20. -
21. Rückleitung
22. (Abführende) Flüssigkeitsleitung
23. Kühleinrichtung
24. -
25. Absorptionsturm
26. Absorptionsturm
27. Zuleitung
28. Abgasleitung
29. Produktausleitung

## Patentansprüche

1. Verfahren zum Reinigen stickoxidhaltiger Gasströme in einem Prozess zur Herstellung von Salpetersäure, bei dem
a. ein NOₓ - haltiger Gasstrom in einem ersten Reaktor (2) im Gegenstrom zu einer wässerigen Waschflüssigkeit geführt wird, wobei sich NOₓ aus dem Gasstrom in die Waschflüssigkeit einlöst,
b. die mit NOₓ angereicherte Waschflüssigkeit aus dem ersten Reaktor (2) anschließend einem zweiten Reaktor (3) zugeführt und dort mit einem sauerstoffreichen Gas in Kontakt gebracht wird, wobei sich eine Salpetersäure enthaltende Flüssigkeit bildet,
c. die Salpetersäure enthaltende Flüssigkeit aus dem zweiten Reaktor (3) abgeführt und ein Teilstrom davon als Waschflüssigkeit in den ersten Reaktor (2) zurückgeführt wird,
d. das im ersten Reaktor (2) entstehende Abgas abgeführt wird, **dadurch gekennzeichnet, dass**
e. das zu reinigende NOₓ-haltige Gas einem ersten Absorptionsturm (25) einer Produktionsanlage zur Herstellung von Salpetersäure entnommen und das im ersten Reaktor (2) anfallende Abgas dem gleichen oder einem zweiten Absorptionsturm (26) der Produktionsanlage zur Herstellung von Salpetersäure zur weiteren Absorption zugeführt wird.

2. Verfahren nach Anspruch 1, **dadurch gekennzeichnet, dass** der aus dem zweiten Reaktor (3) in den ersten Reaktor (2) zurückgeführte Teilstrom der Salpetersäure enthaltenden Flüssigkeit zu 50% bis 99%, bevorzugt 80% bis 95% in den ersten Reaktor (2) zurückgeführt wird.

3. Verfahren nach Anspruch 1 oder 2, **dadurch gekennzeichnet, dass** die Waschflüssigkeit im ersten Reaktor (2) über eine Kontaktzeit von 3s bis 40s mit dem NOₓ - haltigen Gasstrom in Kontakt gebracht wird.

4. Verfahren nach einem der vorhergehenden Ansprüche, **dadurch gekennzeichnet, dass** der Betriebsdruck im ersten Reaktor (2) 0-8 bar(g) beträgt.

5. Verfahren nach einem der vorhergehenden Ansprüche, **dadurch gekennzeichnet, dass** der Waschflüssigkeit im ersten Reaktor (2) Wasserstoffperoxid zugeführt wird.

6. Produktionsanlage zur Herstellung von Salpetersäure, mit wenigstens einem ersten Absorptionsturm (25, 26) sowie einem ersten Reaktor (2), in dessen Kopfraum (6) wenigstens eine Flüssigkeitszuleitung (8, 21) für eine Waschflüssigkeit sowie eine Gasableitung (7) einmünden und in dessen Bodenbereich eine Gaszuleitung (4) für einen NOₓ - haltigen Gasstrom sowie eine Flüssigkeitsableitung (10) einmündet, und mit einem zweiten Reaktor (3), in dessen Kopfraum eine mit der Flüssigkeitsableitung (10) aus dem ersten Reaktor (2) strömungsverbundene Flüssigkeitszuleitung (11) einmündet, in dessen Bodenbereich eine Flüssigkeitsableitung (18) ausmündet und in den eine mit einer Quelle (16) für ein sauerstoffreiches Gas strömungsverbundene Gaszuleitung (15) einmündet, wobei die Flüssigkeitsableitung (18) über eine Rückleitung (21) mit dem Kopfraum (6) des ersten Reaktors (2) strömungsverbunden ist, wobei das zu reinigende NOx-haltige Gas aus der Gaszuleitung (4) dem ersten Absorptionsturm (25) entnommen und das im ersten Reaktor (2) anfallende Abgas über die Gasableitung (7) dem gleichen oder einem zweiten Absorptionsturm (26) zur weiteren Absorption zugeführt wird.

7. Vorrichtung nach Anspruch 6, **dadurch gekennzeichnet, dass** der erste Reaktor (2) und/oder der zweite Reaktor (3) mit einer Packung ausgerüstet ist.

8. Vorrichtung nach Anspruch 6 oder 7, **dadurch gekennzeichnet, dass** die in den ersten Reaktor (2) und/oder in den zweiten Reaktor (3) einmündende Flüssigkeitszuleitung (8, 11, 21) an einer Sprühdüse ausmündet.

## Claims

1. Process for purifying gas streams containing nitrogen oxides in a process for producing nitric acid, in which
a. an NOₓ-containing gas stream is conveyed in countercurrent to an aqueous scrubbing liquid in a first reactor (2), with NOₓ from the gas stream dissolving in the scrubbing liquid,
b. the scrubbing liquid enriched in NOₓ from the first reactor (2) is subsequently fed to a second reactor (3) and brought into contact there with an oxygen-rich gas, forming a liquid containing nitric acid,
c. the liquid containing nitric acid is discharged from the second reactor (3) and a substream thereof is recirculated as scrubbing liquid to the first reactor (2),
d. the offgas formed in the first reactor (2) is discharged,
**characterized in that**
e. the NOₓ-containing gas to be purified is taken from a first absorption tower (25) of a production plant for producing nitric acid and the offgas formed in the first reactor (2) is fed to the same or a second absorption tower (26) of the production plant for producing nitric acid for further absorption.

2. Process according to Claim 1, **characterized in that** from 50% to 99%, preferably from 80% to 95%, of the substream of the liquid containing nitric acid which is recirculated from the second reactor (3) to the first reactor (2) is recirculated to the first reactor (2).

3. Process according to Claim 1 or 2, **characterized in that** the scrubbing liquid is brought into contact with the NOₓ-containing gas stream in the first reactor (2) for a contact time of from 3 s to 40 s.

4. Process according to any of the preceding claims, **characterized in that** the operating pressure in the first reactor (2) is 0-8 bar(g).

5. Process according to any of the preceding claims, **characterized in that** hydrogen peroxide is added to the scrubbing liquid in the first reactor (2).

6. Production plant for producing nitric acid, comprising at least one first absorption tower (25, 26) and a first reactor (2) into the upper space (6) of which at least one liquid feed conduit (8, 21) for a scrubbing liquid and also a gas discharge conduit (7) open and into the bottom region of which a gas feed conduit (4) for an NOₓ-containing gas stream and also a liquid discharge conduit (10) open, and comprising a second reactor (3) into the upper space of which a liquid feed conduit (11) fluidically connected to the liquid discharge conduit (10) from the first reactor (2) opens, in the bottom region of which a liquid discharge conduit (18) emerges and into which a gas feed conduit (15) fluidically connected to a source (16) of an oxygen-rich gas opens, where the liquid discharge conduit (18) is fluidically connected via a return conduit (21) to the upper space (6) of the first reactor (2), where the NOₓ-containing gas to be purified from the gas feed conduit (4) is taken from the first absorption tower (25) and the offgas formed in the first reactor (2) is fed via the gas discharge conduit (7) to the same or a second absorption tower (26) for further absorption.

7. Apparatus according to Claim 6, **characterized in that** the first reactor (2) and/or the second reactor (3) is/are equipped with packing.

8. Apparatus according to Claim 6 or 7, **characterized in that** the liquid feed conduit (8, 11, 21) opening into the first reactor (2) and/or into the second reactor (3) emerges at a spray nozzle.

## Revendications

1. Procédé pour la purification de flux gazeux contenant de l'oxyde d'azote dans un procédé pour la préparation d'acide nitrique, dans lequel
a. un flux gazeux contenant des NOₓ est conduit dans un premier réacteur (2) à contre-courant d'un liquide de lavage aqueux, les NOₓ du flux gazeux se dissolvant dans le liquide de lavage,
b. le liquide de lavage enrichi avec les NOₓ du premier réacteur (2) est alimenté ensuite à un deuxième réacteur (3) et y est mis en contact avec un gaz riche en oxygène, un liquide contenant de l'acide nitrique étant formé,
c. le liquide contenant de l'acide nitrique est évacué du deuxième réacteur (3) et un flux partiel de celui-ci est renvoyé en tant que liquide de lavage dans le premier réacteur (2),
d. le gaz d'échappement produit dans le premier réacteur (2) est évacué,
**caractérisé en ce que**
e. le gaz contenant des NOₓ devant être purifié est prélevé d'une première tour d'absorption (25) d'une installation de production pour la préparation d'acide nitrique et le gaz d'échappement produit dans le premier réacteur (2) est alimenté à celle-ci ou à une deuxième tour d'absorption (26) de l'installation de production pour la préparation d'acide nitrique pour une absorption supplémentaire.

2. Procédé selon la revendication 1, **caractérisé en ce que** le flux partiel du liquide contenant de l'acide nitrique renvoyé depuis le deuxième réacteur (3) dans le premier réacteur (2) est renvoyé dans le premier réacteur (2) à raison de 50 % à 99 %, préférablement de 80 % à 95 %.

3. Procédé selon la revendication 1 ou 2, **caractérisé en ce que** le liquide de lavage dans le premier réacteur (2) est mis en contact avec le flux gazeux contenant des NOₓ pendant un temps de contact de 3 s à 40 s.

4. Procédé selon l'une quelconque des revendications précédentes, **caractérisé en ce que** la pression de fonctionnement dans le premier réacteur (2) est de 0 à 8 bars(g).

5. Procédé selon l'une quelconque des revendications précédentes, **caractérisé en ce que** du peroxyde d'hydrogène est alimenté au liquide de lavage dans le premier réacteur (2).

6. Installation de production pour la préparation d'acide nitrique, comportant au moins une première tour d'absorption (25, 26) ainsi qu'un premier réacteur (2), dans l'espace de tête (6) duquel débouchent au moins une entrée pour liquide (8, 21) pour un liquide de lavage ainsi qu'une sortie pour gaz (7) et dans la partie inférieure duquel débouchent une entrée pour gaz (4) pour un flux gazeux contenant des NOₓ ainsi qu'une évacuation pour liquide (10), et comportant un deuxième réacteur (3), dans l'espace de tête duquel débouchent une entrée pour liquide (11) reliée en écoulement avec l'évacuation pour liquide (10) du premier réacteur (2), dans la partie inférieure duquel débouche en sortant une évacuation pour liquide (18) et débouche une entrée pour gaz (15) reliée en écoulement avec une source (16) pour un gaz riche en oxygène, l'évacuation pour liquide (18) étant reliée en écoulement avec l'espace de tête (6) du premier réacteur (2) par l'intermédiaire d'une conduite de retour (21), le gaz contenant des NOₓ devant être purifié provenant de l'entrée pour gaz (4) étant prélevé de la première tour d'absorption (25) et le gaz d'échappement produit dans le premier réacteur (2) étant alimenté à celle-ci ou à une deuxième tour d'absorption (26), par l'intermédiaire de l'évacuation pour gaz (7) pour une absorption supplémentaire.

7. Dispositif selon la revendication 6, **caractérisé en ce que** le premier réacteur (2) et/ou le deuxième réacteur (3) sont équipés d'un remplissage.

8. Dispositif selon la revendication 6 ou 7, **caractérisé en ce que** l'entrée pour liquide (8, 11, 21) débouchant dans le premier réacteur (2) et/ou dans le deuxième réacteur (3) débouche vers l'extérieur au niveau d'une buse de pulvérisation.
